# EUROPÄISCHE PATENTANMELDUNG

(11) **EP 3 121 551 A1**
(43) Veröffentlichungstag der Anmeldung: **25.01.2017**
(21) Anmeldenummer: 16176082.2
(22) Anmeldetag: 24.06.2016
(51) Int. Cl.: F41G 7/22, G01S 17/89

(54) **SUCHKOPF FÜR EINEN LENKFLUGKÖRPER**

(30) Priorität: 23.07.2015 DE 102015009577
(71) Anmelder: MBDA Deutschland GmbH, 86529 Schrobenhausen (DE)
(72) Erfinder: Dieter, Wagner, 85591 Vaterstetten (DE)
(74) Vertreter: Isarpatent

(57) **Zusammenfassung**

Die Erfindung betrifft einen Suchkopf (13) für einen Lenkflugkörper (8), umfassend ein 3D-Kamerasystem (12) zum Erfassen eines dreidimensionalen Tiefenprofils.

## Beschreibung

Die Erfindung betrifft einen Suchkopf für Lenkflugkörper. Insbesondere betrifft die Erfindung einen Suchkopf mit einem neuartigen optischen dreidimensionalen Annäherungssensor, der besonders vorteilhaft auf der Basis von Time Off Flight (TOF) Kameras ausgeführt ist.

Für die immer intelligenteren Schutzmaßnahmen, die in angreifenden Bedrohungen wie z.B. Flugzeugen oder taktisch ballistische Raketen zum Einsatz kommen, ist es notwendig, die Suchköpfe der Lenkflugkörper immer mehr zu verbessern.

Das Problem der bisherigen Sensoren der Suchköpfe liegt darin, dass diese Schutzmaßnahmen nicht oder nicht präzise genug zu erfassen, identifizieren und diskriminieren können und somit der Flugkörpersteuerung entsprechenden schlechte Zielinformationen liefern.

Ein weiteres Problem der bisherigen Sensoren der Suchköpfe liegt darin, dass sie nicht die Fähigkeit haben die dreidimensionale Kontur und räumliche Lage der Bedrohung zu vermessen, die wiederum aber für eine Optimierung der Wirkung gegen die Bedrohung notwendig sind. Die Optimierung der Wirkung hat eine Erhöhung der Treffgenauigkeit sowie eine Reduzierung der Kollateralschäden zur Folge.

Der vorliegenden Erfindung liegt die Aufgabe zu Grunde, eine verbesserte Zielgenauigkeit und eine Minimierung von Kollateralschäden des Lenkflugkörpers zu erreichen.

Diese Aufgabe wird durch die Merkmale des Anspruchs 1 gelöst. Somit wird die Aufgabe gelöst durch einen Suchkopf, der ein 3D-Kamerasystem umfasst. Das 3D-Kamerasystem ist eingerichtet, ein dreidimensionales Tiefenprofil zu erfassen. Somit ist insbesondere ermöglicht, räumliche Informationen über ein anzufliegendes Ziel bereitzustellen. Dies ermöglicht vorteilhafterweise eine hochgenaue Endansteuerung sowie eine verbesserte Zielidentifikation. Somit kann ein Anflug eines Lenkflugkörpers auf ein Ziel optimiert werden.

Im Rahmen der Erfindung wird unter einem 3D-Kamerasystem ein Kamerasystem verstanden, das räumliche Informationen einer vollständigen Szenerie erfassen kann. Unter einer 3D-Kamer werden daher insbesondere Time-Of-Flight-Kameras, Stereokameras, Triangulationssysteme, Interferometer oder Lichtfeldkameras verstanden. Der Begriff Time-Of-Flight wird mit TOF abgekürzt.

Die Unteransprüche haben bevorzugte Weiterbildungen der Erfindung zum Inhalt.

Vorteilhafterweise weist das 3D-Kamerasystem eine 3D-Kamera sowie eine Kamerasteuerung auf. Dabei ist vorgesehen, dass von der 3D-Kamera das Tiefenprofil erfassbar ist, während von der Kamerasteuerung anhand des Tiefenprofils eine räumliche Position und/oder eine Orientierung eines Ziels relativ zu dem Lenkflugkörper bestimmbar ist. Auf diese Weise sind insbesondere eine Flugbahn und/oder eine Ausrichtung des Ziels relativ zu dem Lenkflugkörper bestimmbar. Der erfindungsgemäße Suchkopf ist daher gemäß der bevorzugten Ausführungsform ausgebildet, detaillierte Informationen über die Bewegung, räumliche Position, Orientierung und dreidimensionales Modell des Ziels zu erlangen. Somit ist der Suchkopf konventionellen Suchköpfen überlegen.

Besonders vorteilhaft weist die Kamera eine Vielzahl von Pixeln auf. Dabei ist insbesondere jeder Pixel einem Raumsektor innerhalb eines Erfassungsbereiches der 3D-Kamera zugeordnet. Somit ist vorteilhafterweise ein Tiefenprofil erfassbar, wobei die Tiefe von jedem Raumsektor, dem ein Pixel zugeordnet ist, einzeln bestimmbar ist. Die Auflösung der 3D-Kamera ist somit auch eine Auflösung für das Tiefenprofil.

Besonders vorteilhaft ist die Anzahl der zu verwendenden Pixel von der Kamerasteuerung einstellbar. Somit ist die Anzahl der zu verwendenden Pixel anpassbar. Insbesondere bei Zielen, die sich schnell bewegen, ist dies vorteilhaft, da mit einer Reduzierung der Anzahl der zu verwendenden Pixel eine Messrate der 3D-Kamera erhöhbar ist. Somit ist eine genauere Zielerfassung ermöglicht.

Weiterhin ist vorteilhafterweise vorgesehen, dass das 3D-Kamerasystem eine Beleuchtervorrichtung aufweist. Somit sind mit dem 3D-Kamerasystem vorteilhafterweise Tiefeninformationen aufgrund der Laufzeit von ausgesandten Lichtimpulsen bestimmbar. Die Beleuchtervorrichtung ist vorteilhafterweise eingerichtet, Lichtimpulse auf einer vordefinierten Wellenlänge auszusenden. Die Lichtimpulse sind dann von der 3D-Kamera detektierbar. Um von der 3D-Kamera detektiert zu werden, werden die Lichtimpulse insbesondere an dem Ziel reflektiert.

Besonders vorteilhaft ist durch die 3D-Kamera eine Laufzeit bestimmbar, die ein von der Beleuchtervorrichtung ausgesandter Lichtimpuls bis zum Auftreffen auf die 3D-Kamera benötigt. Insbesondere ist diese Laufzeit für jedes Pixel der 3D-Kamera unabhängig von den anderen Pixeln bestimmbar. Somit ist eine Tiefenerfassung für jedes Pixel einzeln ermöglicht.

In einer besonders vorteilhaften Ausführungsform ist von der Kamerasteuerung aus dem Tiefenprofil ein dreidimensionales Modell des Ziels generierbar. Dieses dreidimensionale Modell des Ziels ist dann insbesondere mit einem in der Kamerasteuerung gespeicherten Ziel vergleichbar. Auf diese Weise ist insbesondere ein Verwundbarkeitspunkt erkennbar, an dem das Ziel idealerweise getroffen werden soll. Somit lassen sich ein Haltepunkt und/oder ein Annäherungsvektor bestimmen. Dabei ist besonders vorteilhaft vorgesehen, dass der Haltepunkt und/oder der Annäherungsvektor von der Kamerasteuerung an eine Steuerung des Lenkflugkörpers übergeben werden, sodass die Steuerung des Lenkflugkörpers entsprechend der Kommandosignale für den Lenkflugkörper berechnen kann.

In einer bevorzugten Ausführungsform weist die Beleuchtervorrichtung eine Beleuchtersteuerung und eine Beleuchterlichtquelle auf. Dabei ist von der Beleuchtersteuerung eine Sendeleistung der Beleuchterlichtquelle anpassbar. So ist insbesondere eine hohe Sendeleistung erforderlich, wenn das Ziel eine große Entfernung hat. Sobald sich der den Suchkopf tragende Lenkflugkörper dem Ziel nähert, besteht die Gefahr einer Überbelichtung. Sollte erkannt werden, dass die Sättigung der einzelnen Pixel der 3D-Kamera nahezu erreicht ist, wird die Sendeleistung reduziert. Auf diese Weise kann die 3D-Kamera stets in einem optimalen Sättigungsbereich betrieben werden.

Schließlich ist vorteilhafterweise vorgesehen, dass das 3D-Kamerasystem ein Time-Off-Flight Kamerasystem ist. Somit ist insbesondere vorgesehen, dass die Lichtlaufzeit als Basis für die Erfassung von Tiefenprofilen dient.

Die Erfindung betrifft weiterhin einen Lenkflugkörper, der einen Suchkopf wie zuvor beschrieben aufweist. Weiterhin weist der Lenkflugkörper eine Lenkflugkörpersteuerung auf. Die Lenkflugkörpersteuerung ist dabei mit dem 3D-Kamerasystem, insbesondere mit der Kamerasteuerung verbunden. Somit sind die aus dem Tiefenprofil generierten Informationen, insbesondere ein Haltepunkt und/oder einen Annäherungsvektor und/oder eine Ausrichtung des Ziels und/oder eine räumliche Position des Ziels von der Kamerasteuerung an die Lenkflugkörpersteuerung übergebbar. Auf diese Weise ist eine Flugbahn des Lenkflugkörpers optimierbar, um optimal auf das Ziel einwirken zu können. Die Besonderheit der Erfindung liegt insbesondere darin, dass der optische dreidimensionale Annäherungssensor Tiefenprofilinformationen über zu bekämpfende Ziel in Echtzeit liefert. Diese Tiefenprofilinformationen geben Aufschluss über die genau Größe und Form des Zieles, sodass der Lenkflugkörper autonom das Ziel identifizieren und bekämpfen kann. Hierfür wird der Abstand zum Ziel und die räumliche Ausrichtung des Zieles bezüglich des eigenen Lenkflugkörpers ermittelt, wodurch eine exakte Endsteuerung in den optimalen Verwundbarkeitspunkt des Zieles ermöglicht wird.

Durch die Möglichkeit die in Echtzeit ermittelten Tiefenprofildaten des bekämpfende Zieles im Endanflug zu berücksichtigen, bietet die Erfindung einen neue Art der Zielbekämpfung (Zielidentifikation und hochgenaue Endsteuerung innerhalb des Lenkflugkörpers), wie sie mit den existierenden Lösung nicht möglich ist.

Weitere Einzelheiten, Vorteile und Merkmale der vorliegenden Erfindung ergeben sich aus nachfolgender Beschreibung von Ausführungsbeispielen anhand der Zeichnung. Es zeigt:

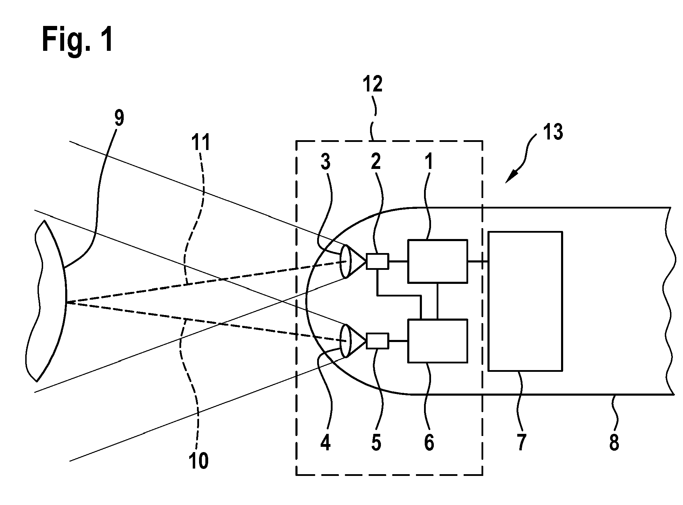

- Fig. 1: eine schematische Darstellung eines Suchkopfes für einen Lenkflugkörper gemäß einem Ausführungsbeispiel der Erfindung.

Figur 1 zeigt schematisch ein Ausführungsbeispiel eines Suchkopfes 13, der an einem Lenkflugkörper 8 angeordnet ist. Der Suchkopf 13 umfasst ein 3D-Kamerasystem 12, mit dem ein anzufliegendes Ziel 9 erfassbar ist.

Das 3D-Kamerasystem 12 dient zum Erfassen von Tiefenprofilen, sodass räumliche Informationen an eine Flugkörpersteuerung 7 übergebbar sind. Dazu ist eine Kamerasteuerung 1 vorhanden, die eine 3D-Kamera 2 ansteuert. Die 3D-Kamera 2 ist insbesondere eine Time-Off-Flight-Kamera. Alternativ kann die 3D-Kamera 2 auch eine Stereokamera oder eine sonstige 3D-Kamera 2 sein. Über eine Kameraoptik 3 ist das Ziel 9 erfassbar.

Weiterhin weist das 3D-Kamerasystem 12 eine Beleuchtervorrichtung 5, 6 auf. Die Beleuchtervorrichtung 5, 6 umfasst eine Beleuchtersteuerung 6 sowie eine Beleuchterlichtquelle 5. Mit der Beleuchterlichtquelle 5 ist über eine Beleuchteroptik 4 ein Lichtimpuls 10 aussendbar. Dabei ist vorgesehen, dass mit der Beleuchterlichtquelle 5 und der Beleuchteroptik 4 der vollständige Erfassungsbereich der 3D-Kamera 2 ausleuchtbar ist. Somit ist das von dem Ziel 9 reflektierte Streulicht 11 von der 3D-Kamera 2 erfassbar. Anhand einer Laufzeit des Lichtimpulses 10 sowie des Streulichts 11 ist eine Entfernung des Ziels 9 von der 3D-Kamera 2 bestimmbar. Somit ist mit der 3D-Kamera 2 ein Tiefenprofil erfassbar.

Wie Fig. 1 an dem Ausführungsbeispiel veranschaulicht, ist die Kamerasteuerung 1 mit der Lenkflugkörpersteuerung 7 des Lenkflugkörpers 8 verbunden. Die Verbindung erfolgt über eine Flugkörperbus-Schnittstelle mittels Datenpaketen. Die Kamerasteuerung 1 ist mit der 3D-Kamera 2 und mit der Beleuchtersteuerung 6 verbunden. Die Verbindung erfolgt über eine Datenschnittstelle mittels Datenpaketen.

Die 3D-Kamera 2 ist mit der Beleuchtersteuerung 6 verbunden. Die Verbindung erfolgt über eine diskrete Digitalschnittstelle. Die 3D-Kamera 2 ist außerdem mit der Kameraoptik 3 verbunden. Die Verbindung erfolgt über eine optische Schnittstelle.

Die Beleuchterlichtquelle 5 ist mit der Beleuchtersteuerung 6 verbunden. Die Verbindung erfolgt über eine diskrete Analogschnittstelle. Die Beleuchterlichtquelle 5 ist außerdem mit der Beleuchteroptik 4 verbunden. Die Verbindung erfolgt über eine optische Schnittstelle.

Um eine Tiefenprofilinformationen zu messen, initialisiert die Kamerasteuerung 1 die die 3D-Kamera 2 und die Beleuchtersteuerung 6. Es werden die maximale sowie minimale Messentfernung, Auflösung, Beleuchtungsstärke und Beleuchtungszeit eingestellt.

Danach startet die Kamerasteuerung 1 eine Messung über die 3D-Kamera 2 welche ihrerseits die Beleuchtersteuerung 6 beauftragt, einen Lichtimpuls 10 mit der Beleuchterlichtquelle 5 zu erzeugen. Der Öffnungswinkel der Beleuchteroptik 4 ist dabei so gewählt, das der gesamte Sichtbereich der Kameraoptik 3 ausgeleuchtet wird.

Gleichzeitig wird in der 3D-Kamera 2 eine Zeitmesseinheit auf Null gesetzt. Der von der Beleuchterlichtquelle 5 erzeugte Lichtimpuls 10 breitet sich mit Lichtgeschwindigkeit aus. Trifft der Lichtimpuls 10 auf das Ziel 9, so wird der Lichtimpuls 10 gestreut. Ein Teil des Lichtimpulses 10, das Streulicht 11, wird in Richtung der Kameraoptik 3 zurückgestreut. Trifft das rückgestreute Streulicht 11 auf die 3D-Kamera 2, wird die vergangene Zeit bezogen auf Startzeit ermittelt. Die verstriche Zeit multipliziert mit der Lichtgeschwindigkeit entspricht exakt der Entfernung zwischen Beleuchterlichtquelle 5, Ziel 9 und zurück zur 3D-Kamera 2.

Das Pixelfeld der 3D-Kamera 2 ist bevorzugt zweidimensional orthogonal organisiert, wobei und über die Kameraoptik 3 jedem Pixel exakt ein Raumsektor zugeordnet ist, ermittelt die 3D-Kamera 2 die Entfernungen pro Raumsektor. Als Ergebnis liegt ein dreidimensionales Tiefenprofil vor.

Das dreidimensionale Tiefenprofil wird von der des Kamerasteuerung 1 aus der 3D-Kamera 2 ausgelesen. Die Kamerasteuerung 1 ermittelt aus dem dreidimensionalen Tiefenprofil die Zielposition, die räumliche Orientierung des Zieles 9 bezüglich des eigenen Lenkflugkörpers 8 und aus einer aufeinander folgende Serie von Tiefenprofielen den Flugpfad des Zieles 9.

Des Weiteren wird die optimale Verwundbarkeitsstelle des Zieles 9, anhand eines Abgleichs zwischen der gemessen dreidimensionalen Zielstruktur und einem dreidimensionalen Zielmodell, bestimmt. Aus der Lage der Verwundbarkeitsstelle wird der Haltepunkt nebst zugehörigem Annäherungsvektor ermittelt.

Die Zielposition, räumliche Orientierung, der Flugpfad, der Haltepunkt und der zugehöriger Annäherungsvektor werden von der Kamerasteuerung 1 an die Lenkflugkörpersteuerung 7 übertragen. Die Lenkflugkörpersteuerung 7 berechnet neue Steuerkommandos um den Lenkflugkörper 8 auf den Haltepunkt zu steuern. Danach wird eine neue Messung gestartet und die neu ermittelten Daten an die Lenkflugkörpersteuerung 7 übertragen, der neue Steuerkommandos für den Lenkflugkörper 8 berechnet. Diese Schleife wird solange durchgeführt bis der Flugkörper 8 an der optimalen Position sich befindet, um den Gefechtskopf zu zünden damit die maximale Wirkung erreicht wird.

Die Energie des Lichtimpulses 10 der durch die Beleuchterlichtquelle 5 erzeugt wird, wird dynamisch an die Entfernung zum Ziel 9 angepasst, sodass das S/N im Empfänger sich im optimalen Bereich befindet.

Für schnell fliegende Ziele 9, wie insbesondere Lenkflugkörper, kann die Auflösung der 3D- Kamera 2 reduziert werden, damit sich die Messrate erhöht und somit eine genaue Steuerung erfolgt.

Die vorliegende Erfindung wird weiterhin wie folgt zusammengefasst:
- Ermittlung der Position des Zieles 9 bezüglich des eigenen Lenkflugkörpers 8
- Ermittlung der Flugbahn des Zieles 9 bezüglich des eigenen Lenkflugkörpers 8
- Ermittlung der Ausrichtung des Zieles 9 bezüglich des eigenen Lenkflugkörpers 8
- Ermittlung der Oberflächenkontur des Zieles 9
- Ermittlung der optimalen Verwundbarkeitsstelle mittels Vergleich mit einem dreidimensionalen Zielmodell
- Ermittlung des Haltepunktes
- Ermittlung des Annäherungsvektors an Haltepunkte
- Dynamische Anpassung der Sendeleistung der Beleuchterlichtquelle 5
- Dynamische Anpassung der Auflösung der 3D-Kamera 2

Neben der vorstehenden schriftlichen Beschreibung der Erfindung wird zu deren ergänzender Offenbarung hiermit explizit auf die zeichnerische Darstellung der Erfindung in Fig. 1 Bezug genommen.

### Bezugszeichenliste

- 1: Kamerasteuerung
- 2: 3D-Kamera
- 3: Kameraoptik
- 4: Beleuchteroptik
- 5: Beleuchterlichtquelle
- 6: Beleuchtersteuerung
- 7: Lenkflugkörpersteuerung
- 8: Lenkflugkörper
- 9: Ziel
- 10: Lichtimpulse
- 11: Streulicht
- 12: 3D-Kamerasystem
- 13: Suchkopf

## Patentansprüche

1. Suchkopf (13) für einen Lenkflugkörper (8), umfassend ein 3D-Kamerasystem (12) zum Erfassen eines dreidimensionalen Tiefenprofils.

2. Suchkopf (13) nach Anspruch 1, **dadurch gekennzeichnet, dass** das 3D-Kamerasystem (12) eine 3D-Kamera (2) sowie eine Kamerasteuerung (1) aufweist, wobei von der 3D-Kamera (2) das Tiefenprofil erfassbar ist und von der Kamerasteuerung (1) anhand des Tiefenprofils eine räumliche Position und/oder Orientierung eines Ziels (9) relativ zu dem Lenkflugkörper (8) bestimmbar ist.

3. Suchkopf (13) nach Anspruch 2, **dadurch gekennzeichnet, dass** die 3D-Kamera (2) eine Vielzahl von Pixeln aufweist, wobei jedem Pixel ein Raumsektor innerhalb eines Erfassungsbereiches der 3D-Kamera (2) zugeordnet ist.

4. Suchkopf (13) nach Anspruch 3, **dadurch gekennzeichnet, dass** die Anzahl der zu verwendenden Pixel von der Kamerasteuerung (1) einstellbar ist.

5. Suchkopf (13) nach einem der Ansprüche 2 bis 4, **dadurch gekennzeichnet, dass** das 3D-Kamerasystem (12) eine Beleuchtervorrichtung (5, 6) aufweist, mit der Lichtimpulse (10) einer vordefinierten Wellenlänge aussendbar ist, wobei mit der 3D-Kamera (2) die Lichtimpulse (10) detektierbar sind.

6. Suchkopf (13) nach Anspruch 5, **dadurch gekennzeichnet, dass** durch die 3D-Kamera (2) eine Laufzeit bestimmbar ist, die ein von der Beleuchtervorrichtung (5, 6) ausgesandter Lichtimpuls (10) bis zum Auftreffen auf die 3D-Kamera (2) benötigt.

7. Suchkopf (13) nach Anspruch 5 oder 6, **dadurch gekennzeichnet, dass** die Beleuchtervorrichtung (5, 6) eine Beleuchtersteuerung (6) und eine Beleuchterlichtquelle (5) umfasst, wobei eine Sendeleistung der Beleuchterlichtquelle (5) durch die Beleuchtersteuerung (6) anpassbar ist.

8. Suchkopf (13) nach einem der Ansprüche 2 bis 7, **dadurch gekennzeichnet, dass** von der Kamerasteuerung (1) ein aus dem Tiefenprofil generiertes dreidimensionales Modell des Ziels (9) mit einem in der Kamerasteuerung (1) gespeicherten Modell des Ziels (9) vergleichbar ist, um einen Haltepunkt und/oder einen Annäherungsvektor zu bestimmen.

9. Suchkopf (13) nach einem der vorhergehenden Ansprüche, **dadurch gekennzeichnet, dass** das 3D-Kamerasystem (12) ein TOF-Kamerasystem ist.

10. Lenkflugkörper (8) umfassend einen Suchkopf (13) nach Anspruch 8, **gekennzeichnet durch** eine Lenkflugkörpersteuerung (7) zur Berechnung von Steuerkommandos, wobei die Steuerkommandos **durch** die Lenkflugkörpersteuer (7) anhand des Haltepunkts und/oder des Annäherungsvektors berechenbar sind.
